# EUROPÄISCHE PATENTSCHRIFT

(11) **EP 4 462 094 B1**
(45) Veröffentlichungstag und Bekanntmachung des Hinweises auf die Patenterteilung: **14.01.2026**
(21) Anmeldenummer: 24174096.8
(22) Anmeldetag: 03.05.2024
(51) Int. Cl.: G01K 1/08, G01K 1/14, G01K 7/02, G01K 13/02

(54) **TEMPERATURFÜHLER**
TEMPERATURE SENSOR
CAPTEUR DE TEMPÉRATURE

(30) Priorität: 08.05.2023 DE 102023111921
(43) Veröffentlichungstag der Anmeldung: 13.11.2024
(73) Patentinhaber: Temperaturmeßtechnik Geraberg GmbH, 98693 Martinroda (DE)
(72) Erfinder: Irrgang, Klaus, 99331 Geratal, OT Geraberg (DE); Bonitz, Björn, 98693 Ilmenau (DE)
(74) Vertreter: Liedtke & Partner Patentanwälte

(56) Entgegenhaltungen:
- EP-B1- 1 180 670
- US-A- 6 059 453

## Beschreibung

Die Erfindung betrifft einen Temperaturfühler.

Beim Einsatz von Temperaturfühlern, insbesondere von Thermoelementen in außergewöhnlich gefährlichen Prozessanlagen, kommt es darauf an, dass im Störungsfall bzw. beim Versagen verschiedener Elemente des Temperaturfühlers keine toxischen Gase aus einem Reaktor, in welchem der Temperaturfühler eingebaut ist, entweichen können. Im Entweichungsfall könnten Betreiber oder Personen zu Schaden kommen, was mit sehr hoher Sicherheit zu verhindern ist. Störungsrelevant ist es auch, wenn Prozessgase oder Prozessflüssigkeiten das Innere des Messfühlers erreichen, d.h. beide Thermodrähte erreichen und diese kontaminieren. Ein kontaminierter thermoelektrischer Temperaturfühler kann die Prozesstemperatur nur noch fehlerhaft oder überhaupt nicht ermitteln. Zeigt der Temperaturfühler die Prozesstemperatur zu niedrig an, könnte ein Prozessregler den jeweiligen Prozess temperaturbezogen überfahren. In Folge dessen könnte das Prozessergebnis negativ beeinflusst und unter Umständen die Prozessanlage beschädigt werden.

Um die genannten Fehler zu vermeiden, wird im Stand der Technik robuste Temperatursensorik eingesetzt. Dazu ist ein mit dem Prozessmedium in Kontakt stehendes Schutzrohr des Thermoelementes außergewöhnlich dicht und bruchsicher ausgeführt.

Weiterhin sollen alle Verbindungen, die sich im Thermometer befinden und über die ein Kontakt an die Außenumgebung des eingebauten Temperaturfühlers möglich wäre, besonders geschützt und sicher sein. Dies betrifft insbesondere auch die Durchführungselemente der thermoelektrischen Leitungen des Temperaturfühlers, durch die jeweils die Thermodrähte nach außen geführt werden.

Da ein Teil der Verbindungen aus instandhaltungstechnischen Gründen, also unter dem Gesichtspunkt der Wiederverwertbarkeit einzelner Bauteile, lösbar auszuführen sind, muss mit speziellen sicheren Dichtungsanordnungen gearbeitet werden.

Ein diesbezügliches Thermoelement für den Einsatz in Vergasungsreaktoren ist im Stand der Technik aus der US 6,059,453 bekannt. Die darin aufgeführten Dichtungen im Thermoelementinneren sind jeweils zweifach ausgeführt, jedoch ohne besondere sicherheitsrelevante Maßnahme. Der innere Verschraubungsmechanismus ist kompliziert und ausgebaute und später nach einer Revision wieder einzubauende Gewindeelemente müssen aufwendig geprüft werden, wobei sich häufig ein bestimmter Ausfall ergibt.

Bestandteil bekannter Temperaturfühler sind Messeinsätze.

Der Erfindung liegt die Aufgabe zugrunde, einen gegenüber dem Stand der Technik verbesserten Temperaturfühler anzugeben.

Die Lösung der Aufgabe gelingt mit den in Anspruch 1 angegebenen Merkmalen.

Vorteilhafte Ausgestaltungen der Erfindung sind Gegenstand der Unteransprüche.

Die Erfindung ist im beigefügten Anspruchssatz beschrieben. Ein Temperaturfühler umfasst einen Messeinsatz mit einem Zwischenfassungsteil und ein durch das Zwischenfassungsteil aufgenommenes Primärschutzrohr, welches eine Anzahl von Thermopaaren umgibt. Die Thermopaare dienen dabei einer Temperaturmessung. Der Temperaturfühler umfasst außerdem ein Fühlergehäuse mit einer Durchgangsöffung für ein Primärschutzrohr.

Erfindungsgemäß ist vorgesehen, dass ein messstellenabgewandtes Ende des Zwischenfassungsteils innerhalb eines ein außenseitiges Gewinde aufweisendes Einschraubteils von diesem mit einem Spalt beabstandet angeordnet ist, dass ein messstellenzugewandtes Ende des Einschraubteils kugelabschnittsförmig ausgebildet ist, dass zwischen dem messstellenzugewandten Ende des Einschraubteils und einer äußeren messstellenabgewandten Anschlagfläche des Zwischenfassungsteils eine Kalottenscheibe angeordnet ist, deren messstellenabgewandte Fläche kugelabschnittsförmig ausgebildet ist und mit der Flächenform des messstellenzugewandten Endes des Einschraubteils korrespondiert und dass am Zwischenfassungsteil außenseitig eine messstellenzugewandte Anschlagfläche angeordnet ist.

Weiterhin ist erfindungsgemäß vorgesehen, dass das Fühlergehäuse ein Innengewinde zum Einschrauben des Einschraubteils und eine messstellenabgewandte Gehäuseanschlagfläche aufweist, die in Lage, Form und Größe mit der messstellenzugewandten Anschlagfläche des Zwischenfassungsteils korrespondiert, dass im Fühlergehäuse in Bezug zum Messeinsatz messstellenabgewandt eine Glasdurchführung gasdicht anordbar oder angeordnet ist und dass die Glasdurchführung einen Metallring umfasst, in welchem sich gasdicht ein gesinterter Glaskörper befindet, in welchem eine Mehrzahl von den Glaskörper durchlaufenden Kontaktstiften gasdicht eingesintert ist. Das messstellenabgewandte Ende des Zwischenfassungsteils ist bevorzugt außenseitig zylindrisch ausgebildet.

Weiterhin ist erfindungsgemäß vorgesehen, dass der Temperaturfühler einen unteren weichmetallischen Dichtring aufweist, der an der messtellenzugewandten Anschlagfläche angeordnet ist.

Unter Verwendung des Messeinsatzes ist auf einfache Weise ein Temperaturfühler kostengünstig herstellbar, der in der Instandhaltung einfach handhabbar ist sowie in einem weiten Temperaturbereich nur geringe parasitäre Fehlerspannungen aufweist und weitgehend gasdicht sowie störsicher ist. Ein derartiger Temperaturfühler ist besonders gut geeignet für Anwendungen, bei denen sowohl extremer Druck als auch Hochtemperatur herrschen.

Wenn bei einem Temperaturfühler dessen Primärschutzrohr verschlissen ist, kann der Messeinsatz, dessen Bestandteil das Primärschutzrohr ist, auf einfache Weise aus dem Temperaturfühler ausgebaut werden und nach Erneuerung sehr sicher und sehr dicht wieder eingebaut werden.

Durch die erfindungsgemäße Merkmalskombination gelingt es, den unteren Dichtring sehr gleichmäßig und homogen zu belasten, weil die erfindungsgemäß korrespondierenden kugelabschnittsförmigen Flächen der Kalottenscheibe und des Einschraubteils eine automatische Zentrierung des Messeinsatzes in den Temperaturfühler und eine automatische Ausrichtung der sich an den unteren Dichtring anlegenden Flächen und damit eine sehr homogene und sehr dauerhaft dichte Abdichtung des Messeinsatzes im Temperaturfühler ermöglichen.

Der erfindungsgemäße Temperaturfühler ermöglicht eine weitgehend fehlerfreie Prozessmessung und damit einen sehr sicheren Prozessbetrieb. Eine ungewollte Kontamination ist dadurch weitgehend vermeidbar, wodurch wiederum eine weitgehende Verhinderung einer Drift des Thermoelementes ermöglicht ist. Dadurch ist eine korrekte elektrische Auswertung des vom Thermoelement erzeugten Spannungssignals ermöglicht.

Der erfindungsgemäße Temperaturfühler ist bevorzugt zur sicheren und sehr präzisen Temperaturmessung in Hochdruck- und Hochtemperatur-Prozessen einsetzbar, und zwar insbesondere auch dann, wenn gefährliche Gase, wie zum Beispiel Wasserstoff, zum Prozessmedium gehören. Der erfindungsgemäße Temperaturfühler ist beispielsweise zur Temperaturmessung in Öl-Vergasungsreaktoren einsetzbar.

Der Durchmesser der Fühlerfassung ist so gering, dass die Installation des Temperaturfühlers sehr einfach und ohne Behinderung durch Anbauteile durchgeführt werden kann. Eine Schnittstelle zum zu messenden Prozess ist über ein normgerechtes Flansch- und Dichtsystem herstellbar.

Der erfindungsgemäße Temperaturfühler sieht vor, dass im Fühlergehäuse in Bezug zum Messeinsatz messstellenabgewandt eine Glasdurchführung gasdicht anordbar oder angeordnet ist. Dadurch ist eine besonders hohe Sicherheit gegen das ungewollte Austreten des Prozessmediums, dessen Temperatur gemessen werden soll, ermöglicht.

Vorteilhaft ist zudem, dass sämtliche Thermopaarkontaktierungen in einem einzigen temperatur- und druckfesten, einfach wechselbaren und wartungsfreien Element vereint sind.

Erfindungsgemäß ist dabei weiter vorgesehen, dass die Glasdurchführung einen vorzugsweise hohlzylinderförmigen Metallring umfasst, in welchem sich gasdicht ein gesinterter Glaskörper befindet, in welchem eine Mehrzahl von Kontaktstiften, die den Glaskörper durchlaufend, gasdicht eingesintert ist.

Beim Stand der Technik, bei dem Zündkerzen verwendet werden, sind die äußeren Anschlüsse eines Plus-Schenkels und eines Minus-Schenkels des Thermopaares durch die links-rechtsseitige Anordnung der Zündkerzen-Durchführungen räumlich sehr stark getrennt. Dieser Nachteil ist erfindungsgemäß auf einfache Weise überwunden. Mit dieser Ausgestaltung gelingt es, die Übergangsstellen der beiden zugehörigen Thermodrähte, das heißt der beiden Thermodrahtschenkel, auf gleichem Temperaturniveau zu halten. Dabei ist es unerheblich, ob diese Übergangsstellen gesteckt oder geschraubt sind. Sich einstellende parasitäre Thermospannungen sind unkritisch, wenn in beiden Übergangsstellen das gleiche Temperaturniveau besteht, was bei dieser Ausgestaltung der Fall ist. Gegenüber einer parasitären Spannung im genannten Stand der Technik mit relativ großer Ortstrennung, sind signifikant geringere parasitäre Spannungen und damit auch geringere Messfehler ermöglicht. Dem gegenüber sind im Stand der Technik die thermoelektrischen Anschlüsse vom "Plus"- und vom "Minus"-Thermoleiter jeweils separat über die sogenannten Zündkerzen-Durchführungen zum weiteren Anschluss nach außen geführt. Die linksseitig und rechtsseitig angeordneten Zündkerzen-Durchführungen, also die elektrischen Anschlüsse, machen dabei den Kopfanschluss vergleichsweise groß, das heißt größer als allgemein in der Temperaturmesstechnik erstrebt. Gegenüber dem Stand der Technik werden durch die Ausgestaltung des erfindungsgemäßen Temperaturfühlers weniger Dichtungen und weniger Gewinde erforderlich, was den Wartungsaufwand reduziert, da Dichtungen und Gewinde bei jeder Wartung geprüft und/oder gewechselt werden müssen.

Die Kontaktstifte sind bevorzugt eng zueinander angeordnet und kurz ausgeführt und in eine druck- und temperaturstabile Glaseinbettung, also in den Glaskörper eingeschmolzen, was die Wahrscheinlichkeit von Messfehlern reduziert. Besonders bevorzugt sind die Kontaktstifte gleich beabstandet im Glaskörper angeordnet und die Glasdurchführung ist mehrfach symmetrisch. Dadurch herrschen in der Glasdurchführung weitgehend homogene Spannungen, wobei im Glaskörper eine bestimmte Druckspannung auch im nichtmontierten Zustand gewollt ist.

Weiterhin ist vorteilhaft, dass sowohl die Glasdurchführung als auch der Messeinsatz mit Zwischenfassungsteil und Primärschutzrohr mit den Thermopaaren jeweils ein ausbaubares Bauelement bilden.

Eine Weiterbildung des erfindungsgemäßen Temperaturfühlers sieht beim Messeinsatz vor, dass das Primärschutzrohr bodengeschlossen ist und aus Saphir oder aus einer drucklos gesinterten Form von Siliziumkarbid, bevorzugt aus Alpha-Siliziumkarbid, gebildet ist. Es hat sich gezeigt, dass derartige Primärschutzrohre besonders beständig sind.

Der erfindungsgemäße, an der messtellenzugewandten Anschlagfläche angeordnete untere weichmetallische Dichtring ist bevorzugt aus Kupfer oder aus einer kupferhaltigen Legierung gebildet, wodurch eine besonders dauerhafte und sowohl druck- als auch hitzebeständige Dichtung herstellbar ist.

Eine Weiterbildung vorgenannter Ausgestaltung des erfindungsgemäßen Temperaturfühlers sieht vor, dass der Metallring der Glasdurchführung mittels eines Gewinderings mittelbar oder unmittelbar gegen eine messstellenabgewandte Dichtungsanschlagfläche des Fühlergehäuses pressbar oder gepresst ist. Dadurch gelingt auf einfache Weise eine besonders sichere Abdichtung der Glasdurchführung im Fühlergehäuse.

Eine Weiterbildung dieser Ausgestaltung sieht vor, dass zwischen dem Metallring der Glasdurchführung und der Dichtungsanschlagfläche ein oberer Dichtring angeordnet ist, der bevorzugt aus einem Weichmetall gebildet ist, beispielsweise aus Kupfer oder aus einer Kupferlegierung. Dadurch gelingt auf einfache Weise eine besonders dauerhafte und wartungsarme Abdichtung der Glasdurchführung im Fühlergehäuse.

Eine weitere Ausgestaltung des erfindungsgemäßen Temperaturfühlers sieht vor, dass der Gewindering mit einem Außengewinde in ein damit korrespondierendes im Fühlergehäuse angeordnetes Gehäuseinnengewinde einschraubbar oder eingeschraubt ist, dass ein messstellenzugewandtes Ringende des Gewinderings kugelabschnittsförmig ausgebildet ist und dass zwischen der Dichtungsanschlagfläche und dem Gewindering eine Glasdurchführungs-Kalottenscheibe angeordnet ist, deren messstellenabgewandte Fläche kugelabschnittsförmig ausgebildet ist und mit der Flächenform des messstellenzugewandten Ringendes des Gewinderings korrespondiert. Dadurch gelingt eine automatisch besonders gleichmäßige Lasteinleitung in den Metallring der Glasdurchführung, wodurch diese homogen angepresst werden kann, sodass die untere Dichtung umlaufend gleichmäßig belastet wird und dadurch sehr gut und dauerhaft dichtet. Ein Raum zwischen der Glasdurchführung und dem Messeinsatz in der Fühlerfassung ist damit als Gassperre gasdicht verschlossen und doppelt gedichtet.

Eine weitere Ausgestaltung des erfindungsgemäßen Temperaturfühlers sieht vor, dass das Primärschutzrohr gasdicht und bodenverschlossen ist und sich Thermoknoten der Thermopaare an einem Boden des Primärschutzrohrs befinden. Dadurch sind die Thermopaare geschützt und an einer Stelle angeordnet, die eine präzise Temperaturmessung ermöglicht.

Eine andere Ausgestaltung des erfindungsgemäßen Temperaturfühlers sieht vor, dass das Primärschutzrohr innerhalb eines Außenschutzrohres angeordnet ist, welches in eine Fühlerfassung des Fühlergehäuses eingekittet ist. Dadurch ist das Primärschutzrohr besonders sicher fixiert und geschützt.

Eine weitere Ausgestaltung des erfindungsgemäßen Temperaturfühlers sieht vor, dass Thermopaardrähte der Thermopaare im Inneren des Primärschutzrohres isoliert zu den Kontaktstiften der Glasdurchführung geführt und an den Kontaktstiften elektrisch angeschlossen sind. Dadurch ist eine besonders hohe Messgenauigkeit erzielbar.

Eine weitere Ausgestaltung des erfindungsgemäßen Temperaturfühlers sieht vor, dass obere periphere Anschlussenden der Kontaktstifte, an welche Verbindungsleitungen für ein Prozesselektronikelement elektrisch anschließbar oder angeschlossen sind, mit einer abnehmbaren, gedichteten Abdeckkappe verdeckt sind, wobei die Abdeckkappe mit einer Überwurfmutter nach außen dicht, insbesondere mit einer gesonderten Dichtung, befestigbar oder befestigt ist. Dadurch sind sowohl die peripheren Anschlussenden der Kontaktstifte als auch die Verbindungsleitungen gegen äußere Einflüsse geschützt, was eine genaue Temperaturmessung ermöglicht.

Eine weitere Ausgestaltung des erfindungsgemäßen Temperaturfühlers sieht vor, dass die Thermopaare Platin-Rhodium-Materialpaarungen sind, was eine Messung besonders hoher Temperaturen ermöglicht.

Der Temperaturfühler hat mehrere Schutzrohre, von denen eines ein gasdichtes Primärschutzrohr ist, welches aus Saphir oder aus Hexoloy SE SiC oder aus ähnlichen Siliziumcarbid-Material mit hexagonaler Kristallstruktur, also aus alpha-Siliziumcarbid, gebildet sind. Dieses Primärschutzrohr liegt in einem metallischen oder keramischen Außenschutzrohr. Das metallische Außenschutzrohr ist medienseitig offen, also nur ein Hüllrohr, und übernimmt Schutzfunktionen gegenüber mechanischen Einflüssen. Das keramische Außenschutzrohr ist bodenverschlossen und übernimmt so mechanischen und teilweise chemischen Schutz. Die Auswahl zwischen keramischem oder metallischem Außenschutzrohr erfolgt entsprechend einer jeweiligen Einsatzspezifikation.

Das medienseitige Ende des Primärschutzrohres ist verschlossen, jedoch zum umgebungsseitigen Ende hin, also zum elektrischen Anschluss hin, offen. Im Primärschutzrohr ist/sind ein oder mehrere Thermopaar/e so angeordnet, dass ihre Thermoknoten sich am Boden des Primärschutzrohres befinden.

Zwei Schenkeldrähte des Thermopaares sind im Inneren des Primärschutzrohres keramikisoliert nach oben zu einer gasdichten Glasdurchführung geführt. Im Gegensatz zur im Stand der Technik bekannten keramischen Zwischendichtung zu der mittels Zündkerzen-Durchführungselementen realisierten Dichtung ist das in der Ausgestaltung der Erfindung verwendete Glasdurchführungselement zuverlässig gasdicht. Diese Glasdurchführung ist sehr kompakt, robust, sowie temperatur- und druckstabil. Außerdem bietet sie die Möglichkeit, mehrere Thermodrähte, beispielsweise vier Thermodrähte, durchzuführen und damit ein thermoelektrisches Mehrkanalelement zu bilden. Ein thermoelektrisches Mehrkanalelement, insbesondere wenn ein Einbau von Thermodrähten mit unterschiedlichen Durchmessern erfolgt, bietet die Möglichkeit einer Drift-Erkennung. Eine Drift-Erkennung ist unter dem Gesichtspunkt einer hohen funktionalen Sicherheit im Hochtemperaturbereich besonders wichtig. Sehr günstig hinsichtlich der Vermeidung parasitärer Thermospannungseffekte ist die kurze Kontaktstiftlänge und die enge räumliche Anordnung der Kontaktstifte im Glaskörper der Glasdurchführung.

Der Gewindering für eine obere Spezialdichtung drückt die kompakte Glasdurchführung auf einen weichmetallischen Dichtring, der in einem Lagersitz der Fühlerfassung liegt.

Für die Verwendung einer solchen Glasdurchführung und eines weichmetallischen Dichtrings ist es ermöglicht, die Druckkräfte auf dem Metallring, also auf die Dichtfläche gleichmäßig zu verteilen, damit im Glaskörper keine ungewollten Spannungen aufgebaut werden und die Dichtung nicht punktuell überlastet wird. Damit ein verkippter Sitz des Gewinderings nicht zu diesen Überlastungen am weichmetallischen Dichtring führt und keine Spannungen im Glaskörper durch Dichtkräfte auftreten, erfolgt die Druckausbreitung des Gewinderings nicht direkt auf eine Lagerfläche des Fühlergehäuses mit dem darüber liegenden Dichtring, sondern auf eine kugelförmige Kalotte. Somit ergibt sich eine gleichmäßige Flächenpressung am Dichtring und eine gleichmäßige Verteilung der Dichtkräfte bei einem ungewollten Verkippen des Gewinderings. Im Resultat ist ein absolut gasdichter Druckraum, auch Gassperre genannt, zum Prozessort unterhalb der Glasdurchführung gewährleistet. Das Ende des Primärschutzrohres ist in dem Zwischenfassungsteil mittels eines keramischen Kitts eingeklebt, wobei das Zwischenfassungsteil auch die Dichtung zur Fühlerfassung hin übernimmt.

Das Primärschutzrohr, das Zwischenfassungsteil mit dem unteren weichmetallischen Dichtring und die Glasdurchführung sind ebenso wie die Thermopaare und deren Isolation Bestandteile des ausbaubaren Messelements.

Hochtemperaturthermopaare sind spezielle Thermopaare. Als Hochtemperaturthermopaare werden bevorzugt Thermopaare vom Typ S, R und B, sowie die Sonderpaarung Pt Rh40 - Pt Rh6 eingesetzt.

Die Enden der Kontaktstifte der Glasführung, beispielsweise die Peripheriekontakte, sind gleichzeitig als Anschlusselemente für einen weiteren messelektrischen Anschluss des Temperaturfühlers ausgebildet. Über das Abziehen der oberen Abdeckkappe sind Anschlussarbeiten einfach möglich und die Peripheriekontakte sind nach erfolgtem Anschluss der Leitungen und nachfolgendem Aufschrauben der Abkappe ausreichend geschützt.

Mit der vorliegenden Erfindung werden die Thermodrähte im Inneren der robusten Schutzrohre deutlich besser geschützt und ermöglichen so eine längere Standzeit des Temperaturfühlers. Wartungsarbeiten sind deutlich einfacher auszuführen, aber auch ein erstmaliger Anschluss ist deutlich vereinfacht. Im Gegensatz zum Stand der Technik mit Zündkerzen können mehrere Thermopaare in den Temperaturfühler eingebaut werden. Ein Fehlereinfluss infolge parasitärer Spannungseffekte ist deutlich gemindert.

Ausführungsbeispiele der Erfindung werden im Folgenden anhand von Zeichnungen näher erläutert.

Darin zeigen:
- Figur 1: eine Schnittdarstellung einer ersten Ausführungsform eines erfindungsgemäßen Temperaturfühlers,
- Figur 2: einen zugehörigen Ausschnitt,
- Figur 3: eine Schnittdarstellung einer ersten Ausführungsform eines Messeinsatzes für den erfindungsgemäßen Temperaturfühler,
- Figur 4: eine Darstellung einer zweiten Ausführungsform eines erfindungsgemäßen Temperaturfühlers und
- Figur 5: eine Ausführungsform einer Glasdurchführung für den erfindungsgemäßen Temperaturfühler.

Einander entsprechende Teile sind in allen Figuren mit den gleichen Bezugszeichen versehen.

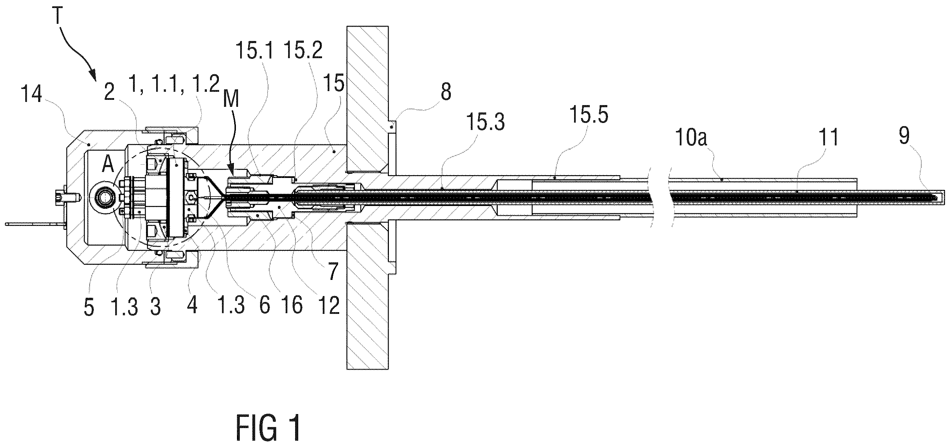

**Figur 1** zeigt einen Längsschnitt einer ersten Ausführungsform eines erfindungsgemäßen Temperaturfühlers T, der eine erste Ausführungsform eines Messeinsatzes M umfasst. Der Temperaturfühler T umfasst eine Glasdurchführung 1, die mittels eines Gewinderings 2 und mittels einer Glasdurchführungs-Kalottenscheibe 3 im Inneren des Temperaturfühlers T fixiert und mittels eines weichmetallischen oberen Dichtrings 4 gedichtet ist.

Die Glasdurchführung 1 in den Figuren umfasst einen Metallring 1.1, in welchem sich gasdicht ein gesinterter Glaskörper 1.2 befindet, in welchem vier den Glaskörper 1.2 durchlaufende Kontaktstifte 1.3 gasdicht eingesintert sind. Messstellenabgewandte Enden der Kontaktstifte 1.3 bilden Peripheriekontakte 5 der Glasdurchführung 1. Vier messstellenzugewandte Enden der Kontaktstifte 1.3 bilden innere Kontakte 6 für einen Thermopaaranschluss.

Ein bodengeschlossenes Primärschutzrohr 11, das bevorzugt aus Saphir oder aus einer drucklos gesinterten Form von Siliziumkarbid, insbesondere aus auch als Hexoloy bezeichnetem Alpha- Siliziumkarbid, gebildet ist, befindet sich im Inneren eines offenen metallischen Außenschutzrohres 10a. Im Primärschutzrohr 11 ist ein Doppelthermoelement angeordnet. Thermopaardrähte einer Anzahl von Thermoelementen 9 sind im Inneren des Primärschutzrohres 11 keramisch isoliert und führen durch ein Zwischenfassungsteil 12 zur Glasdurchführung 1.

Der Gewindering 2 mit der Glasdurchführungs-Kalottenscheibe 3 drückt die Glasdurchführung 1 auf den weichmetallischen oberen Dichtring 4, der aus Kupfer gebildet ist. Die Glasdurchführungs-Kalottenscheibe 3 realisiert einen gleichmäßigen Flächendruck auf den oberen Dichtring 4. An den Peripheriekontakten 5 können Verbindungsleitungen für eine Prozesssteuerung angeschlossen werden. Die Verbindungsleitungen sind durch eine Abdeckkappe 14 geschützt und werden durch eine Kabel-Verschraubung nach außen hindurchgeleitet.

Das Zwischenfassungsteil 12 nimmt das Primärschutzrohr 11 auf.

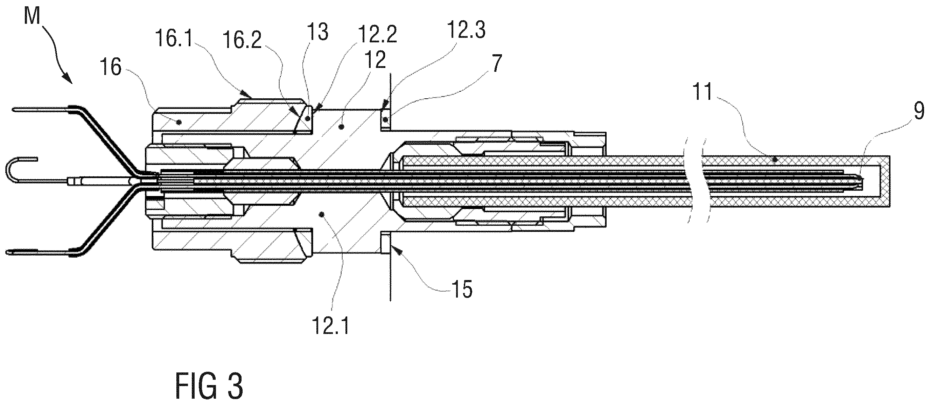

Der Temperaturfühler T umfasst ein Fühlergehäuse 15 mit einer Durchgangsöffung 15.3 für das Primärschutzrohr 11. Das Fühlergehäuse 15 weist ein Innengewinde 15.1 zum Einschrauben eines Einschraubteils 16 und eine messstellenabgewandte Gehäuseanschlagfläche 15.2 auf, die in Lage, Form und Größe mit einer in Figur 3 gezeigten messstellenzugewandten Anschlagfläche 12.3 des Zwischenfassungsteils 12 korrespondiert. An der messstellenabgewandten Gehäuseanschlagfläche 15.2 ist der untere weichmetallische Dichtring 7 angelegt.

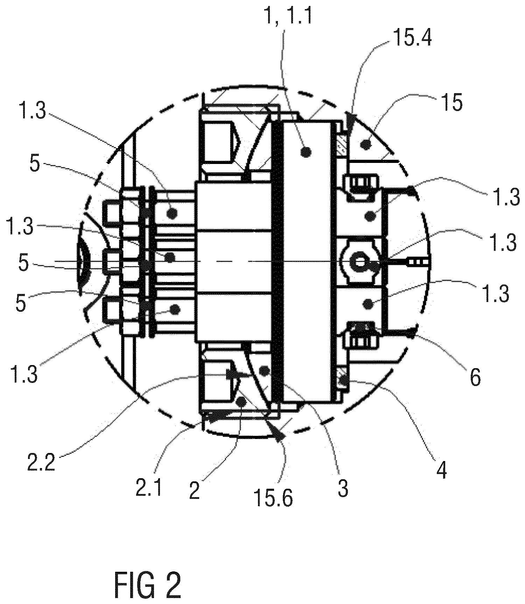

**Figur 2** zeigt einen vergrößerten Ausschnitt von Figur 1 mit der Glasdurchführung 1 in einer Einbausituation. Im Glaskörper 1.2 der Glasdurchführung 1 sind die vier Kontaktstifte 1.3 mit jeweils einem inneren Kontakt 6 für den unteren Anschluss der hier nicht gezeigten Thermopaare 9 eingeschmolzen. Die Kontaktstifte 1.3 sind kurz und dicht zueinander angeordnet und weisen am messstellenabgewandten Ende jeweils die Peripheriekontakte 5 auf. Der Gewindering 2 drückt über die Glasdurchführungs-Kalottenscheibe 3 die Glasdurchführung 1 auf den oberen weichmetallischen Dichtring 4 und damit diesen auf die Dichtungsanschlagfläche 15.4 des Fühlergehäuses 15.

Der Gewindering 2 ist mit einem Außengewinde 2.1 in ein damit korrespondierendes im Fühlergehäuse 15 angeordnetes Gehäuseinnengewinde 15.6 eingeschraubt. Ein messstellenzugewandtes Ringende 2.2 des Gewinderings 2 ist kugelabschnittsförmig ausgebildet und zwischen der Dichtungsanschlagfläche 15.4 und dem Gewindering 2 ist die Glasdurchführungs-Kalottenscheibe 3 angeordnet, deren messstellenabgewandte Fläche kugelabschnittsförmig ausgebildet ist und mit der Flächenform des messstellenzugewandten Ringendes 2.2 des Gewinderings 2 korrespondiert.

**Figur 3** zeigt eine Schnittdarstellung einer ersten Ausführungsform eines Messeinsatzes M, der im in Figur 1 gezeigten Temperaturfühler T verbaut ist. Das Primärschutzrohr 11 ist unten geschlossen. Oben ist dieses Schutzrohr jedoch offen und in dem Zwischenfassungsteil 12 gefasst. Im Primärschutzrohr 11 befinden sich die Thermopaare 9 als Doppelthermopaar. Die Thermopaare 9 sind am Boden des Primärschutzrohres 11 angeordnet. Die freien Enden der Thermopaare 9 können mit den hier nicht gezeigten inneren Kontakten 6 der hier ebenfalls nicht gezeigten Kontaktstifte 1.3 elektrisch verbunden werden. Das Einschraubteil 16 für die Zwischenfassung 12 drückt mit einer Kalottenscheibe 13 über einen Bund gegen den unteren weichmetallischen Dichtring 7 und diesen gegen die entsprechende untere Gehäuseanschlagfläche 15.2 im unteren Teil des hier nicht gezeigten Fühlergehäuses 15, welches nicht Bestandteil des Messeinsatzes M ist.

Ein messstellenabgewandtes Ende 12.1 des Zwischenfassungsteils 12 ist innerhalb des Einschraubteils 16 von diesem mit einem Spalt beabstandet angeordnet. Das Einschraubteil 16 weist ein außenseitiges Gewinde 16.1 auf. Ein messstellenzugewandtes Ende 16.2 des Einschraubteils 16 ist kugelabschnittsförmig ausgebildet. Zwischen dem messstellenzugewandten Ende 16.2 des Einschraubteils 16 und der äußeren messstellenabgewandten Anschlagfläche 12.2 des Zwischenfassungsteils 12 ist die Kalottenscheibe 13 angeordnet, deren messstellenabgewandte Fläche kugelabschnittsförmig ausgebildet ist und die mit der Flächenform des messstellenzugewandten Endes 16.2 des Einschraubteils 16 korrespondiert. Am Zwischenfassungsteil 12 ist außenseitig eine messstellenzugewandte Anschlagfläche 12.3 angeordnet. Das Primärschutzrohr 11 ist bodengeschlossen und aus einer drucklos gesinterten Form von Siliziumkarbid gebildet.

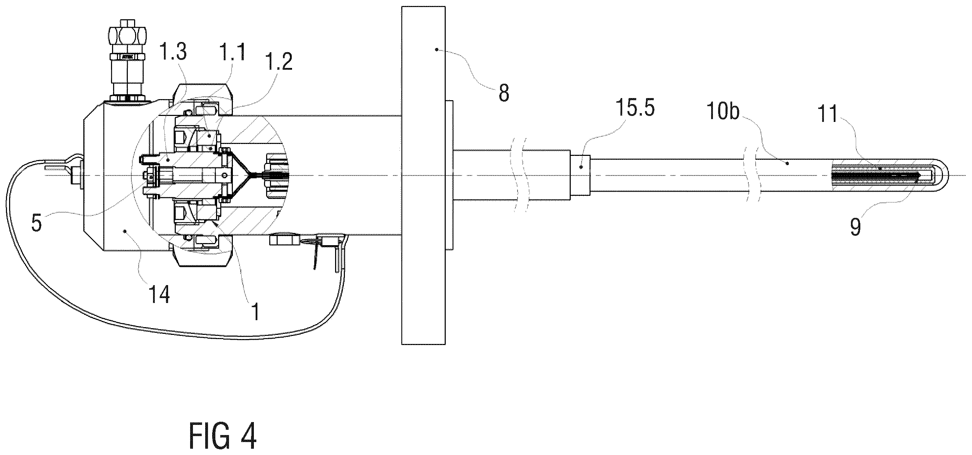

**Figur 4** zeigt eine zweite Ausführungsform eines erfindungsgemäßen Temperaturfühlers T als äußere Ansicht mit partieller Schnittdarstellung. Der Temperaturfühler T weist ein geschlossenes keramisches Außenschutzrohr 10b auf, welches dem Primärschutzrohr 11 übergezogen und im unteren Teil des Fühlergehäuses 15, nämlich in der Fühlerfassung 15.5 eingekittet ist. Am Fühlergehäuse 15 ist ein Befestigungsflansch mit Dichtlippe 8 angeschweißt. Der obere Teil des Fühlergehäuses 15 umfasst im Inneren die Glasdurchführung 1, die aus dem Metallring 1.1, dem Glaskörper 1.2 und den vier Kontaktstiften 1.3 gebildet ist. Die Verbindungen, also die Peripheriekontakte 5, die dem Anschluss der Verbindungsleitungen zu einem Prozessregler oder zu einer Prozesssteuerung dienen, werden mittels der demontierbaren Abdeckkappe 14 geschützt.

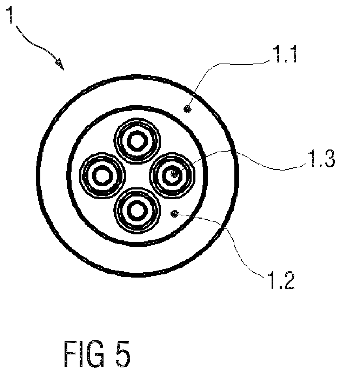

**Figur 5** zeigt die Ausführungsform der Glasdurchführung 1, die in den vorherigen Figuren gezeigt ist und die aus dem Metallring 1.1, dem Glaskörper 1.2 und den vier Kontaktstiften 1.3 gebildet ist, in einer Ansicht von oben.

### BEZUGSZEICHENLISTE

- M: Messeinsatz
- T: Temperaturfühler
- 1: Glasdurchführung
- 1.1: Metallring
- 1.2: Glaskörper
- 1.3: Kontaktstifte
- 2: Gewindering
- 2.1: Außengewinde
- 2.2: Ringende
- 3: Glasdurchführungs-Kalottenscheibe
- 4: oberer Dichtring
- 5: Peripheriekontakte
- 6: innere Kontakte
- 7: unterer weichmetallischer Dichtring
- 8: Befestigungsflansch mit Dichtlippe
- 9: Thermopaare
- 10a: offenes metallisches Außenschutzrohr
- 10b: geschlossenes keramisches Außenschutzrohr
- 11: Primärschutzrohr
- 12: Zwischenfassungsteil
- 12.1: messstellenabgewandtes Ende
- 12.2: messstellenabgewandte Anschlagfläche
- 12.3: messstellenzugewandte Anschlagfläche
- 13: Kalottenscheibe
- 14: Abdeckkappe

- 15: Fühlergehäuse
- 15.1: Innengewinde
- 15.2: Gehäuseanschlagfläche
- 15.3: Durchgangsöffnung
- 15.4: Dichtungsanschlagfläche
- 15.5: Fühlerfassung
- 15.6: Gehäuseinnengewinde
- 16: Einschraubteil des Innenmesseinsatzes
- 16.1: außenseitiges Gewinde
- 16.2: messstellenzugewandtes Ende

## Patentansprüche

1. Temperaturfühler (T), umfassend
- einen Messeinsatz (M) mit einem Zwischenfassungsteil (12) und ein durch das Zwischenfassungsteil (12) aufgenommenes Primärschutzrohr (11), welches eine Anzahl von Thermopaaren (9) umgibt und
- ein Fühlergehäuse (15) mit einer Durchgangsöffung (15.3) für das Primärschutzrohr (11),
- ein Einschraubteil (16) mit einem außenseitigen Gewinde (16.1),
wobei
- ein messstellenabgewandtes Ende (12.1) des Zwischenfassungsteils (12) innerhalb des Einschraubteils (16) angeordnet ist,
- am Zwischenfassungsteil (12) außenseitig eine messstellenzugewandte Anschlagfläche (12.3) angeordnet ist,
- das Fühlergehäuse (15) ein Innengewinde (15.1) zum Einschrauben des Einschraubteils (16) und eine messstellenabgewandte Gehäuseanschlagfläche (15.2) aufweist, die in Lage, Form und Größe mit der messstellenzugewandten Anschlagfläche (12.3) des Zwischenfassungsteils (12) korrespondiert,
- im Fühlergehäuse (15) in Bezug zum Messeinsatz (M) messstellenabgewandt eine Durchführung gasdicht anordbar oder angeordnet ist,
- die Durchführung einen Metallring (1.1) umfasst, in welchem sich gasdicht ein Körper befindet, in welchem eine Mehrzahl von den Körper durchlaufenden Kontaktstiften gasdicht angeordnet ist,
- der Temperaturfühler (T) ferner einen unteren weichmetallischen Dichtring (7) aufweist, der an der messstellenzugewandten Anschlagfläche (12.3) angeordnet ist **dadurch gekennzeichnet, dass**
- ein messstellenzugewandtes Ende (16.2) des Einschraubteils (16) kugelabschnittsförmig ausgebildet ist,
- zwischen dem messstellenzugewandten Ende (16.2) des Einschraubteils (16) und einer äußeren messstellenabgewandten Anschlagfläche (12.2) des Zwischenfassungsteils (12) eine Kalottenscheibe (13) angeordnet ist, deren messstellenabgewandte Fläche kugelabschnittsförmig ausgebildet ist und mit der Flächenform des messstellenzugewandten Endes (16.2) des Einschraubteils (16) korrespondiert und
- die Durchführung als eine Glasdurchführung (1) ausgebildet ist,
- der Körper als ein gesinterter Glaskörper (1.2) ausgebildet ist, in welchem die Kontaktstifte (1.3) gasdicht eingesintert sind,
- wobei das messstellenabgewandte Ende (12.1) des Zwischenfassungsteils (12) innerhalb des Einschraubteils (16) von diesem mit einem Spalt beabstandet angeordnet ist.

2. Temperaturfühler (T) nach Anspruch 1,
**dadurch gekennzeichnet, dass** das Primärschutzrohr (11) bodengeschlossen ist und aus Saphir oder aus einer drucklos gesinterten Form von Siliziumkarbid gebildet ist.

3. Temperaturfühler (T) nach einem der vorhergehenden Ansprüche,
**dadurch gekennzeichnet, dass** der Metallring (1.1) der Glasdurchführung (1) mittels eines Gewinderings (2) mittelbar oder unmittelbar gegen eine messstellenabgewandte Dichtungsanschlagfläche (15.4) des Fühlergehäuses (15) gepresst ist.

4. Temperaturfühler (T) nach Anspruch 3,
**dadurch gekennzeichnet, dass** zwischen dem Metallring (1.1) der Glasdurchführung (1) und der Dichtungsanschlagfläche (15.4) ein oberer Dichtring (4) angeordnet ist.

5. Temperaturfühler (T) nach Anspruch 4,
**dadurch gekennzeichnet, dass** der obere Dichtring (4) aus einem Weichmetall gebildet ist.

6. Temperaturfühler (T) nach einem der Ansprüche 3 bis 5, sofern abhängig von Anspruch 3,
**dadurch gekennzeichnet, dass**
- der Gewindering (2) mit einem Außengewinde (2.1) in ein damit korrespondierendes im Fühlergehäuse (15) angeordnetes Gehäuseinnengewinde (15.6) einschraubbar oder eingeschraubt ist,
- ein messstellenzugewandtes Ringende (2.2) des Gewinderings (2) kugelabschnittsförmig ausgebildet ist,
- zwischen der Dichtungsanschlagfläche (15.4) und dem Gewindering (2) eine Glasdurchführungs-Kalottenscheibe (3) angeordnet ist, deren messstellenabgewandte Fläche kugelabschnittsförmig ausgebildet ist und mit der Flächenform des messstellenzugewandten Ringendes (2.2) des Gewinderings (2) korrespondiert.

7. Temperaturfühler (T) nach einem der vorhergehenden Ansprüche,
**dadurch gekennzeichnet, dass** das Primärschutzrohr (11) gasdicht und bodenverschlossen ist und sich Thermoknoten der Thermopaare (9) an einem Boden des Primärschutzrohrs (11) befinden.

8. Temperaturfühler (T) nach einem der vorhergehenden Ansprüche,
**dadurch gekennzeichnet, dass** das Primärschutzrohr (11) innerhalb eines Außenschutzrohres (10a, 10b) angeordnet ist, welches in eine Fühlerfassung (15.5) des Fühlergehäuses (15) eingekittet ist.

9. Temperaturfühler (T) nach einem der vorhergehenden Ansprüche,
**dadurch gekennzeichnet, dass** Thermopaardrähte der Thermopaare (9) im Inneren des Primärschutzrohres (11) isoliert zu den Kontaktstiften (1.3) der Glasdurchführung (1) geführt und an den Kontaktstiften (1.3) elektrisch angeschlossen sind.

10. Temperaturfühler (T) nach einem der vorhergehenden Ansprüche,
**dadurch gekennzeichnet, dass** obere periphere Anschlussenden der Kontaktstifte (1.3) als Peripheriekontakte (5), an welche Verbindungsleitungen für ein Prozesselektronikelement elektrisch anschließbar oder angeschlossen sind, mit einer abnehmbaren, gedichteten Abdeckkappe (14) verdeckbar oder verdeckt sind, wobei die Abdeckkappe (14) mit einer Überwurfmutter (14.1) befestigbar oder befestigt ist.

11. Temperaturfühler (T) nach einem der vorhergehenden Ansprüche,
**dadurch gekennzeichnet, dass** die Thermopaare (9) Platin-Rhodium-Materialpaarungen sind.

## Claims

1. Temperature sensor (T), comprising
- a measuring insert (M) with an intermediate holder part (12), and a primary protection tube (11) which is received by the intermediate holder part (12) and which surrounds a number of thermocouples (9), and
- a sensor housing (15) with a through-opening (15.3) for the primary protection tube (11),
- a screw-in part (16) with an external thread (16.1),
wherein
- an end (12.1) of the intermediate holder part (12) facing away from the measuring point is arranged within the screw-in part (16),
- a stop surface (12.3) facing the measuring point is arranged on the outside of the intermediate holder part (12),
- the sensor housing (15) has an internal thread (15.1) for the screwing-in of the screw-in part (16) and has a housing stop surface (15.2) which faces away from the measuring point and which corresponds in position, shape and size to the stop surface (12.3) of the intermediate holder part (12) facing the measuring point,
- a feed-through is arrangeable or arranged in a gas-tight manner in the sensor housing (15), facing away from the measuring point in relation to the measuring insert (M),
- the feed-through comprises a metal ring (1.1) in which a body is located in a gas-tight manner, in which body a plurality of contact pins passing through the body are arranged in a gas-tight manner,
- the temperature sensor (T) further comprises a lower soft-metal sealing ring (7), which is arranged on the stop surface (12.3) facing the measuring point, **characterized in that**
- an end (16.2) of the screw-in part (16) facing the measuring point is formed in the shape of a spherical segment,
- a spherical disc (13) is arranged between the end (16.2) of the screw-in part (16) facing the measuring point and an outer stop surface (12.2) of the intermediate holder part (12) facing away from the measuring point, the surface of which spherical disc facing away from the measuring point is formed in the shape of a spherical segment and corresponds to the surface shape of the end (16.2) of the screw-in part (16) facing the measuring point, and
- the feed-through is designed as a glass feed-through (1),
- the body is formed as a sintered glass body (1.2), in which the contact pins (1.3) are sintered in a gas-tight manner,
- wherein the end (12.1) of the intermediate holder part (12) facing away from the measuring point is arranged within the screw-in part (16), spaced apart from the latter by a gap.

2. Temperature sensor (T) according to Claim 1,
**characterized in that** the primary protection tube (11) is closed at the bottom and is formed from sapphire or from a pressurelessly sintered form of silicon carbide.

3. Temperature sensor (T) according to either of the preceding claims, **characterized in that** the metal ring (1.1) of the glass feed-through (1) is pressed, by means of a threaded ring (2), directly or indirectly against a sealing stop surface (15.4) of the sensor housing (15) facing away from the measuring point.

4. Temperature sensor (T) according to Claim 3,
**characterized in that** an upper sealing ring (4) is arranged between the metal ring (1.1) of the glass feed-through (1) and the sealing stop surface (15.4).

5. Temperature sensor (T) according to Claim 4,
**characterized in that** the upper sealing ring (4) is formed from a soft metal.

6. Temperature sensor (T) according to any one of Claims 3 to 5, where dependent on claim 3,
**characterized in that**
- the threaded ring (2) is screwable or screwed with an external thread (2.1) into a corresponding housing internal thread (15.6) arranged in the sensor housing (15),
- a ring end (2.2) of the threaded ring (2) facing the measuring point is designed in the shape of a spherical segment,
- a glass feed-through spherical disc (3) is arranged between the sealing stop surface (15.4) and the threaded ring (2), its surface facing away from the measuring point being formed in the shape of a spherical segment and corresponding to the surface shape of the ring end (2.2) of the threaded ring (2) facing the measuring point.

7. Temperature sensor (T) according to either of the preceding claims, **characterized in that** the primary protection tube (11) is gas-tight and closed at the bottom, and thermal nodes of the thermocouples (9) are located at a bottom of the primary protection tube (11).

8. Temperature sensor (T) according to either of the preceding claims, **characterized in that** the primary protection tube (11) is arranged within an outer protection tube (10a, 10b) which is cemented into a sensor holder (15.5) of the sensor housing (15).

9. Temperature sensor (T) according to either of the preceding claims, **characterized in that** thermocouple wires of the thermocouples (9) in the interior of the primary protection tube (11) are routed in an insulated manner to the contact pins (1.3) of the glass feed-through (1) and are electrically connected to the contact pins (1.3).

10. Temperature sensor (T) according to either of the preceding claims, **characterized in that** upper peripheral connection ends of the contact pins (1.3) as peripheral contacts (5), to which connecting lines for a process electronics element are electrically connectable or connected, are coverable or covered with a removable, sealed cover cap (14), wherein the cover cap (14) is fastenable or fastened with a union nut (14.1).

11. Temperature sensor (T) according to either of the preceding claims, **characterized in that** the thermocouples (9) are platinum-rhodium material pairings.

## Revendications

1. Sonde de température (T), comprenant
- un insert de mesure (M) avec une partie de support intermédiaire (12) et un tube de protection primaire (11) reçu par la partie de support intermédiaire (12), lequel entoure un nombre donné de thermocouples (9) et
- un boîtier (15) de sonde avec une ouverture de passage (15.3) pour le tube de protection primaire (11),
- une partie à visser (16) avec un filetage (16.1) côté extérieur,
- une extrémité (12.1) opposée à l'emplacement de mesure de la partie de support intermédiaire (12) étant disposée à l'intérieur de la partie à visser (16),
- une surface de butée (12.3) tournée vers l'emplacement de mesure étant disposée côté extérieur sur la partie de support intermédiaire (12),
- le boîtier (15) de sonde comportant un filetage intérieur (15.1) destiné à visser la partie à visser (16) et une surface de butée (15.2) de boîtier opposée à l'emplacement de mesure, dont la position, la forme et la dimension correspondent à la surface de butée (12.3) tournée vers l'emplacement de mesure de la partie de support intermédiaire (12),
- un passage pouvant être disposé ou étant disposé de manière étanche aux gaz à l'opposé de l'emplacement de mesure par rapport à l'insert de mesure (M) dans le boîtier (15) de sonde,
- le passage comprenant une bague métallique (1.1), dans laquelle se trouve de manière étanche aux gaz un corps, dans lequel est disposée de manière étanche au gaz une multitude de broches de contact traversées par le corps,
- la sonde de température (T) comportant en outre une bague d'étanchéité (7) inférieure en métal mou, qui est disposée sur la surface de butée (12.3) tournée vers l'emplacement de mesure, **caractérisée en ce que**
- une extrémité (16.2) tournée vers l'emplacement de mesure de la partie à visser (16) est réalisée avec une forme de segment sphérique,
- un disque bombé (13), dont la surface opposée à l'emplacement de mesure est réalisée en forme de segment sphérique et correspond à la forme de surface de l'extrémité (16.2) tournée vers l'emplacement de mesure de la partie à visser (16), est disposé entre l'extrémité (16.2) tournée vers l'emplacement de mesure de la partie à visser (16) et une surface de butée extérieure (12.2) opposée à l'emplacement de mesure de la partie de support intermédiaire (12) et
- le passage est réalisé comme un passage en verre (1),
- le corps est réalisé comme un corps en verre (1.2) fritté, dans lequel les broches de contact (1.3) sont frittées de manière étanche aux gaz,
- l'extrémité (12.1) opposée à l'emplacement de mesure de la partie de support intermédiaire (12) étant disposée à l'intérieur de la partie à visser (16) de manière espacée de celle-ci par une fente.

2. Sonde de température (T) selon la revendication 1,
**caractérisée en ce que** le tube de protection primaire (11) est fermé en bas et est formé à partir de saphir ou à partir d'une forme frittée sans pression de carbure de silicium.

3. Sonde de température (T) selon l'une des revendications précédentes, **caractérisée en ce que** la bague métallique (1.1) du passage en verre (1) est pressée indirectement ou directement contre une surface de butée de joint d'étanchéité (15.4) opposée à l'emplacement de mesure du boîtier (15) de sonde au moyen d'une bague filetée (2).

4. Sonde de température (T) selon la revendication 3,
**caractérisée en ce qu'**une bague d'étanchéité supérieure (4) est disposée entre la bague métallique (1.1) du passage en verre (1) et la surface de butée de joint d'étanchéité (15.4).

5. Sonde de température (T) selon la revendication 4,
**caractérisée en ce que** la bague d'étanchéité supérieure (4) est formée à partir d'un métal mou.

6. Sonde de température (T) selon l'une des revendications 3 à 5, dans la mesure où elles dépendent de la revendication 3,
**caractérisée en ce que**
- la bague filetée (2) peut être vissée ou est vissée avec un filetage extérieur (2.1) dans un filetage intérieur (15.6) de boîtier correspondant à celui-ci disposé dans le boîtier (15) de sonde,
- une extrémité (2.2) de bague tournée vers l'emplacement de mesure de la bague filetée (2) est réalisée avec une forme de segment sphérique,
- un disque bombé (3) de passage en verre, dont la surface opposée à l'emplacement de mesure est réalisée avec une forme de segment sphérique et correspond à la forme de surface de l'extrémité de bague (2.2) tournée vers l'emplacement de mesure de la bague filetée (2), est disposé entre la surface de butée de joint d'étanchéité (15.4) et la bague filetée (2).

7. Sonde de température (T) selon l'une des revendications précédentes, **caractérisée en ce que** le tube de protection primaire (11) est étanche aux gaz et fermé en bas et des thermonœuds des thermocouples (9) se trouvent sur une partie basse du tube de protection primaire (11).

8. Sonde de température (T) selon l'une des revendications précédentes, **caractérisée en ce que** le tube de protection primaire (11) est disposé à l'intérieur d'un tube de protection extérieur (10a, 10b), lequel est mastiqué dans un support (15.5) de sonde du boîtier (15) de sonde.

9. Sonde de température (T) selon l'une des revendications précédentes, **caractérisée en ce que** des fils de thermocouple des thermocouples (9) sont guidés vers les broches de contact (1.3) du passage en verre (1) de manière isolée à l'intérieur du tube de protection primaire (11) et sont raccordés électriquement aux broches de contact (1.3).

10. Sonde de température (T) selon l'une des revendications précédentes, **caractérisée en ce que** des extrémités de raccordement périphériques supérieures des broches de contact (1.3) en tant que contacts périphériques (5), auxquels des câbles de connexion pour un élément électronique de processus peuvent être ou sont raccordés, peuvent être dissimulées ou sont dissimulées par un capot de recouvrement (14) rendu étanche, pouvant être retiré, le capot de recouvrement (14) pouvant être fixé ou étant fixé avec un écrou- raccord (14.1).

11. Sonde de température (T) selon l'une des revendications précédentes, **caractérisée en ce que** les thermocouples (9) sont des paires de matériaux platine-rhodium.
